# EUROPEAN PATENT SPECIFICATION

(11) **EP 0 746 760 B1**
(45) Date of publication and mention of the grant of the patent: **23.08.2000**
(21) Application number: 95909024.2
(22) Date of filing: 22.02.1995
(51) Int. Cl.: G01N 23/00

(54) **DETECTION OF IMPURITIES IN METAL AGGLOMERATES**
DETEKTION VON VERUNREINIGUNGEN IN METALLAGGLOMERATEN
DETECTION DES IMPURETES DANS UN ENSEMBLE DE DECHETS METALLIQUES

(30) Priority: 25.02.1994 GB 9403614
(43) Date of publication of application: 11.12.1996
(73) Proprietor: Corus UK Limited, London W1V 2BS (GB); CETTO MASCHINENBAU GMBH & CO. KG., 40878 Ratingen (DE)
(72) Inventor: HARVEY, David, Spencer, Rotherdam South Yorkshire S66 0RU (GB); DEHNHARDT, Stefan, D-40878 Ratingen (DE)
(74) Representative: Fry, Alan Valentine
(86) International application number: GB9500363
(87) International publication number: WO9523334

(56) References cited:
- EP-A- 0 174 797
- AU-B- 541 125
- DE-A- 3 914 864

## Description

This invention relates to the detection of impurities in metal agglomerates such as scrap metals and in particular to methods of screening scrap metals for unwanted impurities.

The recycling of metals has always been an important industry, and it is currently becoming even more important. Metals such as aluminium, copper, zinc, brass and steel are collected as scrap and are then reprocessed for re-use. One example is the electric arc steel making process which uses scrap almost exclusively for its feedstock.

Because of the wide variety of sources from which scrap may be collected its quality can vary widely and the scrap may be mixed with a number of non-metallic impurities or contaminants. Commonly found contaminants are ceramic materials. Such impurities contain naturally radioactive constituents to a greater extent than metals. Alternatively, there may be radioactive contaminant materials themselves in the scrap. To determine quickly the amount of such contamination in a lorry load of scrap when it is presented at a scrap yard is not an easy matter. One particular problem is the shielding effect of scrap loads themselves. There is, as is well known, a naturally occurring background level of gamma radiation and therefore any detection system must be set to ignore this. Unfortunately it is found that a load of scrap lowers the measured background level of gamma radiation, the effect being greater for greater loads. It will be realised that this reduction in the background level measured can allow some large loads to pass as uncontaminated when they are in fact contaminated, if the detection system is set to pass uncontaminated small loads. Any adjustment of the detection system to compensate, runs the risk of rejecting uncontaminated small loads. It is therefore an object of the present invention to provide a method of analysing the quality of scrap metal with respect to contamination quickly and easily and reliably.

Previous developments have included the system described in AU-B-0541125, which does not concern itself with the case of radioactive contamination of a non-radioactive mass, but with a radioactive ore, a somewhat different problem, and EP-A-0174797, which assumes that any radioactivity of a strength to be of interest will be clearly greater than that of the background.

According to the invention there is provided a method of detecting the presence of radioactive impurities in a metal agglomeration as defined in claim 1.

The agglomeration may be a load of scrap metal. The emissions from the agglomeration may be from non-metallic contaminants, and the energy bands may be selected from those characteristic of potassium, actinium, bismuth, lead and thallium. The method may include measurement by scanning by a matrix of gamma ray detectors disposed around the agglomeration. The level of the emissions measured with the agglomeration present may be used to estimate additionally the quantity of radioactive impurities present.

The invention will now be described by way of example only with reference to the accompanying drawings in which:
Figures 1 and 2 are diagrammatic front and side views of a lorry being analysed;
Figure 3 is a possible arrangement for the analysis of scrap on a conveyor belt; and
Figure 4 is diagram of gamma ray energy bands measured in the detection and analysis system.

As has been explained the analysis of scrap for non-metallic content is not easy and there is a requirement to be able to do this reliably, simply and quickly in scrap yard environments. The method adopted is to measure the gamma ray radiation from a particular load of scrap on a lorry or railway truck or from a particular position on a conveyor belt or indeed in any other situation in which scrap is being handled.

The method relies in part on the fact that in general the non-metallic contaminants do have a level of radioactive activity, albeit quite low in absolute terms. Typical levels are 0.3-1.0 Becquerels/g. The impurities commonly found are glass, concrete, dirt or slag and it is known that these contain traces of uranium, thorium and their decay products as well as potassium. Gamma radiation of the isotopes and energies shown in Table 1 will be found. These are all relatively high energy gamma rays. In general, metals contain extremely small amounts of radioactive isotopes and therefore have a significantly lower gamma ray activity than non-metallic materials of typically ten times lower. Any significant detection of radioactivity therefore indicates contamination of the metal. It is also known that metals in the dimensions and quantities of interest with respect to the invention do not wholly absorb gamma radiation. Therefore either the radioactive contamination of the non-metallic impurities are those generating the preponderance of such gamma radiation in a load of contaminated scrap and the radiation being emitted, or the radioactivity is due to a specific radioactive contamination of the scrap, rather than the natural radioactivity of non-metals.

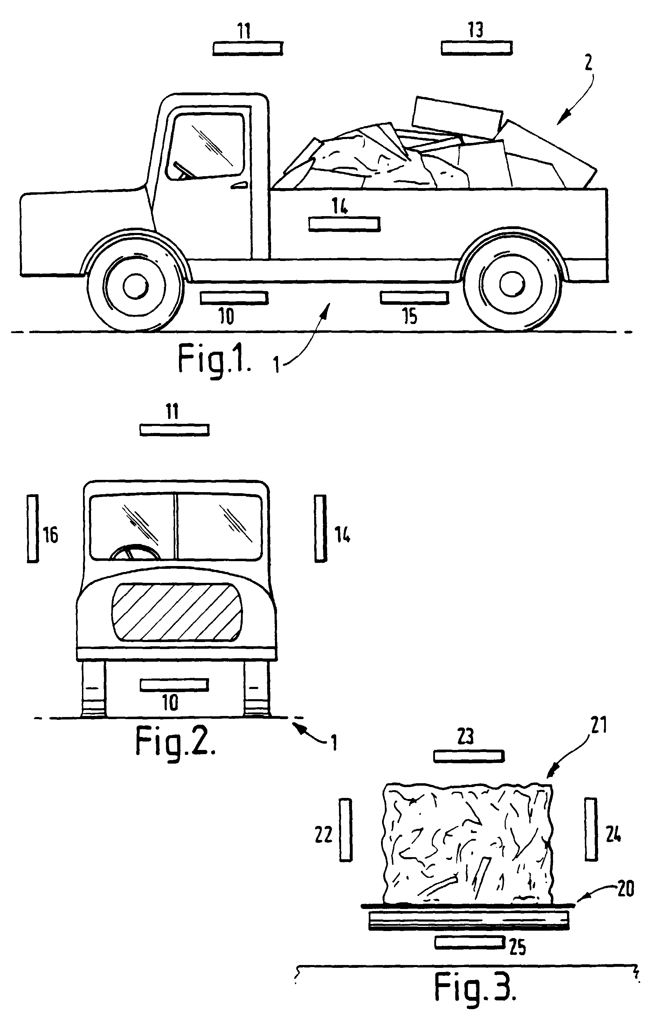

Turning now to Figures 1 and 2 which show respectively a side and front view of a road vehicle containing scrap diagrammatically positioned between a typical arrangement of radioactivity detectors. The vehicle 1 contains scrap 2 which may contain non-metallic impurities. The six detectors 10 to 15 are arranged in a matrix around the lorry and the output from these are analysed into energy bands and the totals in each energy band are summed. The detectors may for example be caesium iodide scintillation counters or semiconductor counters such as high purity germanium.

In Figure 3 the arrangement of detectors about a conveyor belt carrying scrap is shown. The belt 20 is carrying a supply of scrap, for example in bales 21 and the detectors 22 and 25 surround the belt. The detectors are connected in a similar way to those of Figures 1 and 2.

The information provided by the detectors in either case can be used in two particular ways. First, where there is a considerable amount of non-metallic contaminant or a heavy radioactive contamination in the scrap itself the overall reading will be relatively high, above a predetermined threshold, and although a detailed analysis could be made by the method outlined later in all probability the high level of contaminants shown would mean the rejection of the scrap load or its down grading.

Where the level from non-metallic contaminants is less than the predetermined threshold the level of ionising radiation picked up will be significantly affected by the naturally occurring background radiation and therefore it is necessary to resort to some simple signal processing in order to estimate the level of contamination. As has already been mentioned, to add to analysis problems the actual measured background level will vary with the size of the scrap load. What we do is analyse the radiation received by energy bands. The energy bands in which radiation is expected from typical contaminants is shown in Table 1 and by computing the amounts of these isotopes on the basis of the radiation found at these specific energies a level of contaminants present can be calculated.

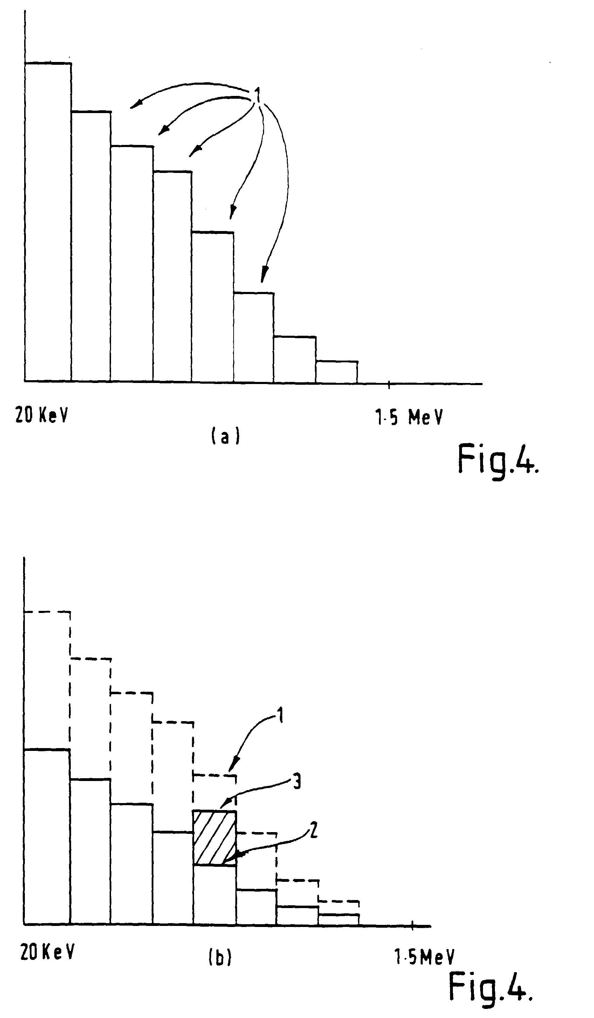

Turning to Figure 4, this shows in (a) the normal background spectrum that might be found for gamma ray radiation between 20KeV and 1.5MeV, the intensity for each band being shown by the height of the respective bar shown at (1).

In (b) a scrap load has been introduced. The levels of background radiation measured have fallen from the levels (as shown in (a)) illustrated by the dotted lines to new levels shown solid. However, the whole spectrum falls in the same proportion. If radioactive contamination is present it will occur at specific energy levels and therefore will increase the intensity of some, but not all bands. This is shown in Figure 4(b) where the energy band 5 was originally at intensity 1 without the scrap load present, and would have fallen to the intensity 2 when the scrap load was introduced without any contamination. But this load is contaminated with a gamma ray emitting contaminant, whose characteristics energy falls in the band 5. The band 5 intensity rises to the level 3, which can be detected as being a level out of ratio with the other energy bands, the ratios being of course determined by the relative intensities with no scrap load present.

These measurements will in general give the amount of non-metallic material or specifically radioactive contaminant present in a load of scrap on a truck or at a particular point on a conveyor line, for example. In order to estimate the percentage of contamination the details of the bulk density, total weight and cross-sectional area of the scrap load itself may be needed. This might be conveniently obtained for example from weighbridge date and type of truck, and, for example, it would be possible to arrange for an operator to enter the make of a truck, for the weight automatically to be supplied from the weighbridge and for the measurements of the radioactivity to be made simultaneously. The density, volume and cross-sectional area of the scrap could all thus be determined automatically and an estimate of the percentage contamination of non-metallic material in the scrap could be obtained.

**TABLE 1**

| **Element** | **Isotope** | **Energy, Mev** |
|---|---|---|
| Potassium | K-40 | 1.46 |
| Actinium | Ac-228 | 0.91 |
| Bismuth | Bi-214 | 1.12 and 1.76 |
| Lead | Pb-211 | 0.83 |
| Thallium | Tl-208 | 2.61 |

## Claims

1. A method of detecting the presence of radioactive impurities in a metal agglomeration comprising the steps of measuring in each of a plurality of discrete gamma ray energy bands the background gamma ray emission without the agglomeration in the measuring apparatus, measuring the combined emission from the agglomeration and background emission with the agglomeration present, determining the ratios of the measured emissions in each of the energy bands, and using the divergences of the ratios between the energy bands as an indicator of the presence of radioactive impurities in the agglomeration.

2. A method as claimed in Claim 1 wherein the agglomeration is a load of scrap metal.

3. A method as claimed in Claim 1 or 2 in which the emissions from the agglomeration are from non-metallic contaminants.

4. A method as claimed in Claim 1 or 2 in which the energy bands are selected from those characteristic of potassium, actinium, bismuth, lead and thallium.

5. A method as claimed in any preceding claim in which the measurements take place by scanning by a matrix of gamma ray detectors disposed around the agglomeration.

6. A method as claimed in any preceding claim in which the level of the emissions is used to estimate additionally the quantity of radioactive impurities present.

## Patentansprüche

1. Verfahren zur Detektion des Vorhandenseins radioaktiver Verunreinigungen in einem Metallagglomerat mit den folgenden Schritten: es wird in jedem einer Vielzahl diskreter Gammastrahlungs-Bänder die Hintergrund-Gammastrahlungs-Emission ohne das Agglomerat in der Meßvorrichtung gemessen; es wird die kombinierte Emission von Agglomerat und Hintergrund-Emission bei vorhandenem Agglomerat gemessen; es werden die Verhältnisse der gemessenen Emissionen in jedem der Engergiebänder bestimmt und es wird die Divergenz der Verhältnisse zwischen den Energiebändern als Indikator für das Vorhandensein radioaktiver Verunreinigungen im Agglomerat benutzt.

2. Verfahren nach Anspruch 1, bei welchem das Agglomerat eine Ladung Schrottmetall ist.

3. Verfahren nach den Ansprüchen 1 oder 2, bei welchem die Emissionen aus dem Agglomerat von nicht-metallischen Verunreinigungen herrühren.

4. Verfahren nach den Ansprüchen 1 oder 2, bei welchem die Energiebänder ausgewählt werden aus den Charakteristiken von Kalium, Actinium, Wismuth, Blei und Thallium.

5. Verfahren nach einem der vorhergehenden Ansprüche, bei welchem die Messungen durchgeführt werden, indem eine Abtastung durch eine Matrix von Gammastrahlen-Detektoren erfolgt, die um das Agglomerat herum angeordnet sind.

6. Verfahren nach einem der vorhergehenden Ansprüche, bei welchem der Pegel der Emissionen benutzt wird, um zusätzlich die Menge der vorhandenen radioaktiven Verunreinigungen zu berechnen.

## Revendications

1. Un procédé pour détecter la présence d'impuretés radioactives dans un ensemble de déchets métalliques comprenant les étapes de mesurer dans chacune d'une pluralité de bandes discrètes d'énergie de rayonnement gamma, l'émission du fond de rayonnement gamma sans la présence de cet ensemble dans l'appareil de mesure, mesurer l'émission combinée de l'émission de l'ensemble et de fond avec l'ensemble présent, déterminer les rapports des émissions mesurées dans chacune des bandes d'énergie, et utiliser les différences de rapport entre les bandes d'énergie comme un indicateur de la présence d'impuretés radioactives dans l'ensemble.

2. Un procédé selon la revendication 1 dans lequel l'ensemble est une charge de mitraille métallique.

3. Un procédé selon la revendication 1 ou 2 dans lequel les émissions depuis l'ensemble proviennent de contaminants non-métalliques.

4. Un procédé selon la revendication 1 ou 2 dans lequel les bandes d'énergie sont choisies parmi celles caractérisant le potassium, l'actinium, le bismuth, le plomb et le thallium.

5. Un procédé selon l'une quelconque des revendications précédentes dans lequel les mesures ont lieu par balayage au moyen d'une matrice de détecteurs de rayons gamma disposés autour de l'ensemble.

6. Un procédé selon l'une quelconque des revendications précédentes dans lequel le niveau des émissions est utilisé pour estimer en outre la quantité d'impuretés radioactives présentes.
